# EUROPEAN PATENT APPLICATION

(11) **EP 4 131 169 A1**
(43) Date of publication of application: **08.02.2023**
(21) Application number: 20928340.7
(22) Date of filing: 21.12.2020
(51) Int. Cl.: G06T 11/60

(54) **SAMPLE STORAGE DEVICE, AND OPERATION METHOD AND OPERATION PROGRAM THEREOF**

(30) Priority: 31.03.2020 JP 2020064615
(71) Applicant: FUJIFILM Corporation, Tokyo 106-8620 (JP)
(72) Inventor: NOGUCHI, Yukinori, Tokyo 106-8620 (JP)
(74) Representative: Parker, Andrew James
(86) International application number: PCT/JP2020/047779
(87) International publication number: WO 2021/199533

(57) **Abstract**

A sample storage device executes acquisition processing of acquiring an album created by combining a template with an image, alteration processing of altering a face of a person included in the image in the album to a state where specifying an individual is difficult, and storage processing of storing the album on which the alteration processing is performed in a database as a sample to be used for creating a new album.

## Description

### BACKGROUND OF THE INVENTION

### 1. Field of the Invention

The disclosed technology relates to a sample storage device, and an operation method and an operation program thereof.

### 2. Description of the Related Art

An album creation service for creating an album by pasting a plurality of photos captured at a wedding ceremony or the like on a template has been known. JP2007-026422A discloses an album creation device that supports album creation using a template. The template functions as a mount on which photos are pasted, includes a plurality of frames into which photos are fitted, and defines a size and a number of frames, a layout of the frame in a page, and the like.

### SUMMARY OF THE INVENTION

While some album creation devices perform photo selection of determining which photo is pasted on which frame of the template using a program, there are also many album creation devices that leave such photo selection to a manual operation of a user who is an editor of the album.

The user performs an editing work of selecting a photo to be fitted into each frame in the template by visually checking the photos one by one from the plurality of photos while considering an overall configuration and a flow of the album. The overall configuration and the flow of the album mean an editing principle of the album such as which photo is arranged in which order. Particularly, in a case of a wedding ceremony or the like, the number of photos to be used in the album is generally significantly large. In this case, the editing work of selecting the photos to be used in the album from a large quantity of photos requires a significant amount of time. In addition, in a case of a wedding ceremony or the like, there are various aspects such as a difference in venue or, even with the same venue, a difference in style such as a Shinto style or a church style, and the editing principle of the album may significantly change in accordance with such various aspects. Considering only a degree of completeness of the album, it is preferable to optimize the album for the various aspects. However, in this case, the editing work generally requires an extra amount of time.

The template is used as means for reducing the amount of time of the editing work. However, even in a case where only the template that defines only the frames into which the photos are fitted is prepared, it is difficult to have an image of the overall configuration and the flow of the album, and the photo selection of determining which photo is fitted into which frame still requires an amount of time.

Therefore, using not only the template but also a created album in which photos are fitted as a sample in the editing work of the album is considered. With the sample in which the photos are fitted, it is easy to have an image of the overall configuration and the flow of the album such as which photo is arranged in which order. Thus, the sample is effective for reducing the amount of time of the editing work.

However, a method of using the created album as the sample poses the following problems. First, a major album creation company or the like has an accumulation of a large quantity of albums inside the company. Thus, an employee of the company easily uses the albums as samples. In addition, in the major album creation company, albums of wedding ceremonies held in the same venue are continuously created on a premise of a contract relationship with a fixed venue. Thus, the major album creation company is generally contracted for creation of albums of the same venue and thus, easily collects samples appropriate for the venue. On the other hand, in a case where a small business operator such as a cameraman performing imaging at the wedding ceremony or an individual business operator is contracted for creation of albums, the number of types of samples that can be used by the small business operator is generally small because of a significantly small accumulation of the samples. Particularly, the small business operator is generally not continuously contracted for creation of the albums of the wedding ceremonies in the same venue and is generally contracted with different venues on a daily basis. Thus, it is difficult to use samples appropriate for various venues.

Therefore, sharing the samples between small album creation companies is considered. However, sharing the samples with photos between different companies poses a problem from a viewpoint of protecting privacy of an album creation requester.

One embodiment according to the disclosed technology provides a sample storage device that can share various samples while protecting privacy of a photo provider included in a sample of an album.

A sample storage device according to an aspect of the present disclosure comprises at least one processor, in which the processor is configured to execute acquisition processing of acquiring an album created by combining a template with an image, alteration processing of altering a face of a person included in the image in the album to a state where specifying an individual is difficult, and storage processing of storing the album on which the alteration processing is performed in a storage unit as a sample to be used for creating a new album.

An operation method of a sample storage device including at least one processor according to another aspect of the present disclosure comprises, by the processor, executing acquisition processing of acquiring an album created by combining a template with an image, executing alteration processing of altering a face of a person included in the image in the album to a state where specifying an individual is difficult, and executing storage processing of storing the album on which the alteration processing is performed in a storage unit as a sample to be used for creating a new album.

An operation program of a sample storage device according to still another aspect of the present disclosure causes a computer including at least one processor to function as a sample storage device, the operation program causing the processor to execute acquisition processing of acquiring an album created by combining a template with an image, alteration processing of altering a face of a person included in the image in the album to a state where specifying an individual is difficult, and storage processing of storing the album on which the alteration processing is performed in a storage unit as a sample to be used for creating a new album.

### BRIEF DESCRIPTION OF THE DRAWINGS

Fig. 1 is a schematic diagram for describing a collection function of a sample storage device.
Fig. 2 is a schematic diagram for describing a presentation function of the sample storage device.
Fig. 3 is a block diagram of the sample storage device.
Fig. 4 is a description diagram illustrating a summary of collection processing.
Fig. 5 is a description diagram illustrating an example of generalization processing.
Fig. 6 is a description diagram of stored sample information.
Fig. 7 is a description diagram illustrating a summary of presentation processing.
Fig. 8 is a diagram illustrating an example of a main screen.
Fig. 9 is a diagram illustrating an example of a search screen in a first embodiment.
Fig. 10 is a diagram illustrating an example of a list display screen.
Fig. 11 is a diagram illustrating an example of a sample display screen.
Fig. 12 is a diagram illustrating an example of an editing screen.
Fig. 13 is a flowchart illustrating a processing procedure of the collection processing.
Fig. 14 is a flowchart illustrating a processing procedure of the presentation processing.
Fig. 15 is a description diagram illustrating another example of the generalization processing.
Fig. 16 is a description diagram illustrating still another example of the generalization processing.
Fig. 17 is a description diagram illustrating still another example of the generalization processing.
Fig. 18 is a diagram illustrating an example of a search screen in a second embodiment.
Fig. 19 is a schematic diagram of a method of calculating a degree of similarity between a user image and a sample.
Fig. 20 is a diagram illustrating an example of a list display screen in the second embodiment.
Fig. 21 is a description diagram of a third embodiment.
Fig. 22 is a description diagram illustrating an example of installing an operation program stored in a storage medium on the sample storage device.

### DESCRIPTION OF THE PREFERRED EMBODIMENTS

### [First Embodiment]

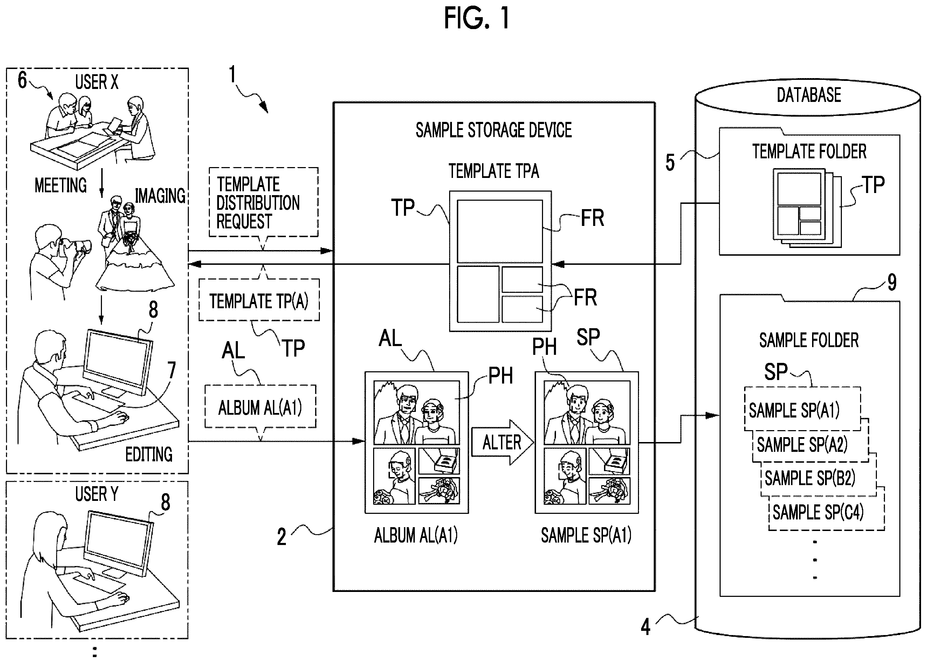

For example, a sample sharing system 1 illustrated in Fig. 1 as an example is a system for sharing albums AL created by a plurality of users among the users as a sample SP in newly creating the album AL. For example, the sample sharing system 1 can be accessed from the plurality of users through a communication network such as the Internet. For example, the user is a business operator contracted for only creation of the album AL and/or a cameraman contracted for both of photo capturing and the creation of the album AL. For example, the album AL consists of one or more pages including a frame FR and an image PH associated with the frame FR. In addition, the album AL includes information about a template TP that determines a layout of the frame FR. Furthermore, for example, the image PH is digital data representing a photo. For example, the album AL is the album AL for wedding in which the image PH obtained by imaging a state of a wedding ceremony is used. In the present example, the album AL for wedding will be illustratively described. In addition, the sample SP consists of one or more pages including the frame FR and an image that is associated with the frame FR and is altered to a state where specifying an individual is difficult. In addition, the sample SP includes the information about the template TP that determines the layout of the frame FR.

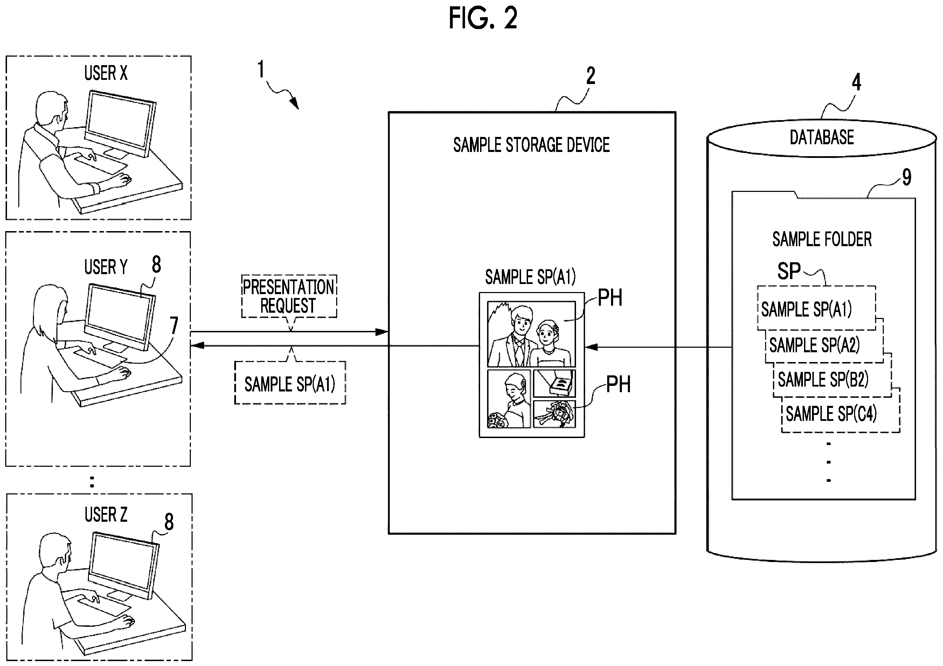

The sample sharing system 1 comprises a sample storage device 2. The sample storage device 2 has a collection function (refer to Fig. 1) of collecting the album AL created by the user as the sample SP and a sample presentation function (refer to Fig. 2) of receiving a presentation request of a sample from the user and presenting the sample SP to the user.

First, the collection function of the sample storage device 2 will be described with reference to Fig. 1. In Fig. 1, a database 4 for storing the template TP and the sample SP is connected to the sample storage device 2. A template folder 5 in which a plurality of the templates TP are stored, and a plurality of sample folders 9 in which the sample SP is stored by classifying the sample SP for each template TP used in the sample SP are provided in the database 4. The template TP is a file that defines the frame FR into which the image PH is fitted in creating the album AL. The template TP includes a plurality of the frames FR and defines a size, a number, and a layout of each frame FR for each page. In the sample sharing system 1, various templates TP having different numbers and layouts of frames FR are prepared. The user can download and use any template TP from the database 4.

In Fig. 1, while reference numerals such as (A) and (Al) are attached to the reference numerals of the template TP, the sample SP, and the album AL, these reference numerals are sub-reference numerals used for distinguishing the individual templates TP and the like. For example, in Fig. 1, A of the album AL(AN) indicates the template TP in which the template TP(A) is used. For example, N of sub-reference numeral (AN) of the album AL is a serial number for distinguishing a plurality of albums AL(A1), AL(A2), ..., in which the template TP(A) is used. N is an integer greater than or equal to 1. In addition, the same applies to sub-reference numeral (AN) attached to the sample SP. The sample SP(A1) indicates the sample SP created based on the album AL(A1).

In Fig. 1, for example, a user X is a cameraman contracted for both of photo capturing and creation of the album AL. The user X is requested to perform the photo capturing at a wedding ceremony and the creation of the album AL from a requester 6. The user X hears a preference for photos to be captured and the album AL to be created from the requester 6 and performs the photo capturing and the creation of the album AL in accordance with the preference of the requester 6.

After performing the photo capturing, the user X creates the album AL using the captured image PH and a user terminal 7 such as a personal computer (PC). The user X selects the template TP corresponding to the preference of the requester 6 and downloads the selected template TP to the user terminal 7. Specifically, the user X accesses the sample sharing system 1 through the user terminal 7, views the plurality of templates TP, and selects a preferred template TP. In a case where a template distribution request is received from the user terminal 7, the sample storage device 2 reads out the template TP from the template folder 5 of the database 4 and distributes the template TP to the user terminal 7.

The user X creates the album AL using the downloaded template TP. Specifically, for example, the album AL(A1) is completed by performing an editing work of fitting the captured image PH into the frame FR of the template TP. The user X delivers the completed album AL(A1) to the requester 6. The album AL is created by combining the template TP with the image PH.

In addition, the sample storage device 2 can be provided with the created album AL from the user X in order to collect the album created by the user X as the sample SP. The user X registers the album AL in the sample storage device 2 as the sample SP using a sample registration function, described later. In the example in Fig. 1, the created album AL(A1) is provided by the user X, and the sample storage device 2 registers the provided album AL(A1) as the sample SP(A1).

The sample storage device 2 executes alteration processing of altering the image PH included in the album AL to a state where specifying an individual subject is difficult, on the created album AL. The album AL on which the alteration processing is performed is stored in the sample folder 9 of the database 4 as the sample SP.

Next, the presentation function of the sample SP of the sample storage device 2 will be described with reference to Fig. 2. In Fig. 2, a user Y is a user different from the user X. Hereinafter, the users X and Y will be simply referred to as the "user" unless otherwise necessary to distinguish therebetween. For example, in a case where the user Y wants to use the sample SP in the editing work of the album AL, the user terminal 7 accesses the sample sharing system 1 in accordance with an operation performed by the user Y and transmits the presentation request of the sample SP to the sample storage device 2. The sample storage device 2 presents the sample SP to the request source user terminal 7 in accordance with the presentation request. For example, the user terminal 7 downloads the sample SP(A1) as a desired sample SP in accordance with an operation performed by the user Y The user Y uses the downloaded sample SP(A1) in creating a new album AL.

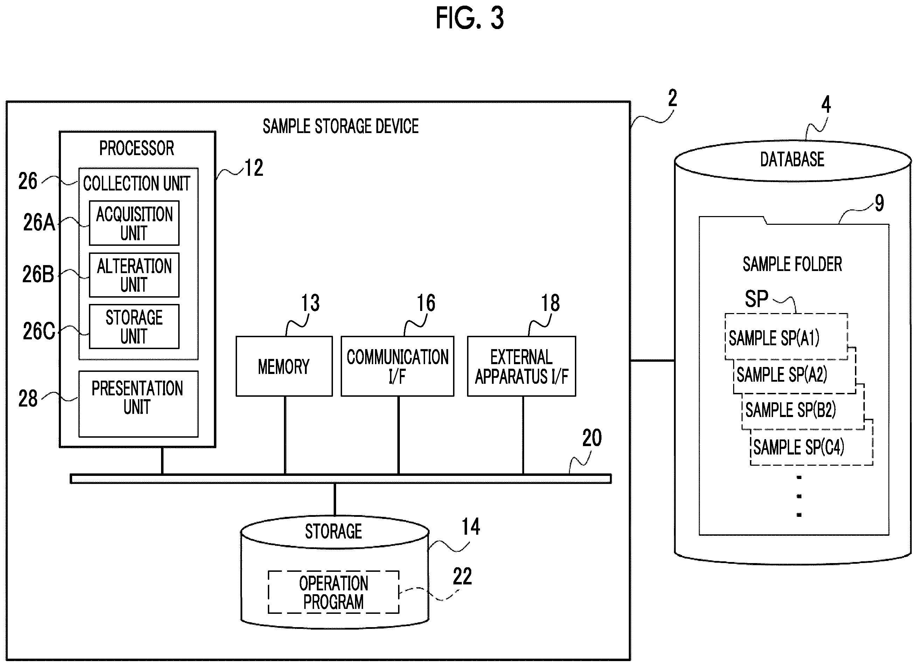

As illustrated in Fig. 3 as an example, the sample storage device 2 includes a processor 12, a memory 13, a storage 14, a communication I/F 16, and an external apparatus I/F 18. These units are connected to each other through a busline 20.

The memory 13 is a work memory for executing processing by the processor 12. The processor 12 functions as a collection unit 26 and a presentation unit 28 by loading an operation program 22 stored in the storage 14 into the memory 13 and executing processing in accordance with the program. For example, the processor 12 is a central processing unit (CPU). Furthermore, the collection unit 26 functions as an acquisition unit 26A, an alteration unit 26B, and a storage unit 26C. The communication I/F 16 is an interface for connecting to a network. The network is a wide area network (WAN) such as the Internet or a local area network (LAN) such as Wifi, and a connection method thereof may be a wired method or a wireless method. For example, the sample storage device 2 controls transmission of data to the database 4 through the communication I/F 16. The external apparatus I/F 18 is an interface for connecting to an external apparatus and is, for example, a universal serial bus (USB) I/F. For example, the sample storage device 2 controls transmission of data to the external apparatus including the PC or the like of each user through the external apparatus I/F 18.

The database 4 is an example of a storage unit that stores data such as the sample SP. Specifically, the database 4 is a storage device such as a hard disk drive and a solid state drive. The database 4 may be included in a server apparatus having a storage function.

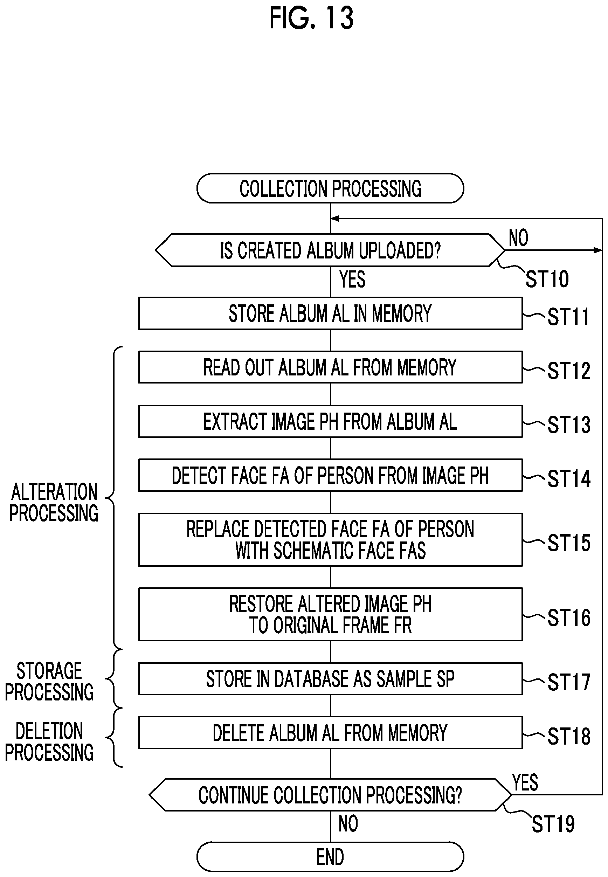

The collection unit 26 of the processor 12 executes collection processing (refer to Fig. 13) of altering the album AL created by the user and storing the altered album AL as the sample SP. In the collection processing, the acquisition unit 26A executes acquisition processing of acquiring the created album AL. The alteration unit 26B executes the alteration processing of altering the image PH included in the acquired created album AL to the state where specifying the individual subject is difficult. The storage unit 26C executes storage processing of storing the album AL on which the alteration processing is performed in the database 4 as a new sample SP.

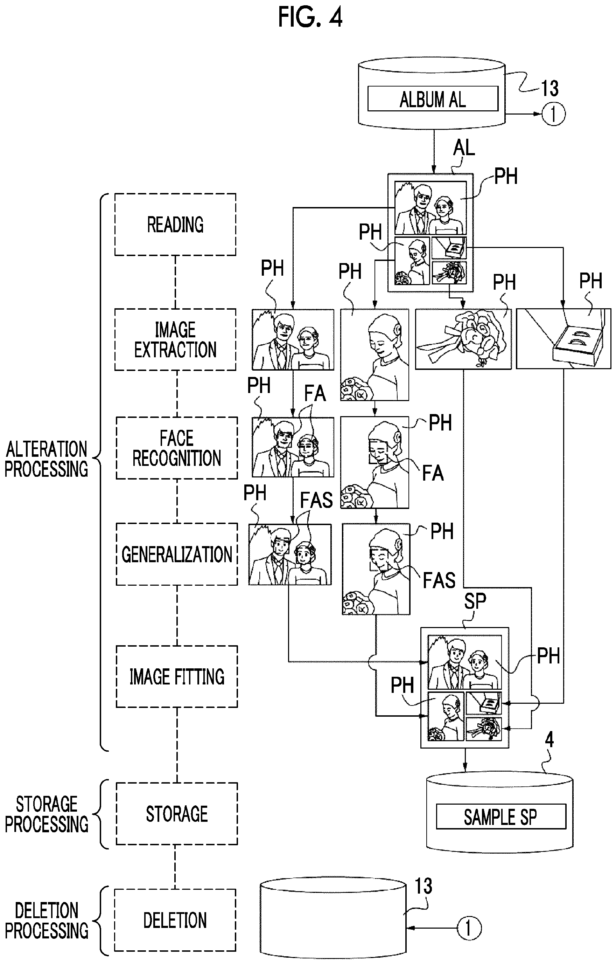

As illustrated in Fig. 4 as an example, in the alteration processing, the alteration unit 26B first reads out the album AL from the memory 13. In Fig. 4, while one page in the album AL is representatively illustrated in order to avoid complication of the drawing, a plurality of pages are present in the album AL, and the alteration unit 26B performs the alteration processing on all pages of the album AL.

The alteration unit 26B extracts the image PH from the read album AL. A plurality of the images PH are included in the album AL. For example, the alteration unit 26B extracts all images PH fitted in each page from the album AL. Four images PH are fitted in the page displayed in the example in Fig. 4, and all of these images PH are extracted.

The alteration unit 26B detects a face FA of a person included in the image PH by performing face recognition processing on each extracted image PH. As the face recognition processing, image analysis processing performed by outline extraction, pattern matching, and the like is performed. In a case where the face FA of the person is detected from the image PH by the face recognition processing, the alteration unit 26B performs subsequent generalization processing. For the image PH in which the face FA of the person is not included, the generalization processing is skipped. In the example in Fig. 4, the face FA of the person is included in two images PH among the four images PH. The generalization processing is performed on the two images PH in which the face FA of the person is included. The generalization processing is the alteration processing of altering the face FA of the person included in the image PH in the album AL to the state where specifying the individual is difficult. For example, the state where specifying the individual is difficult indicates a state where the individual cannot be specified unless processing such as realteration is performed.

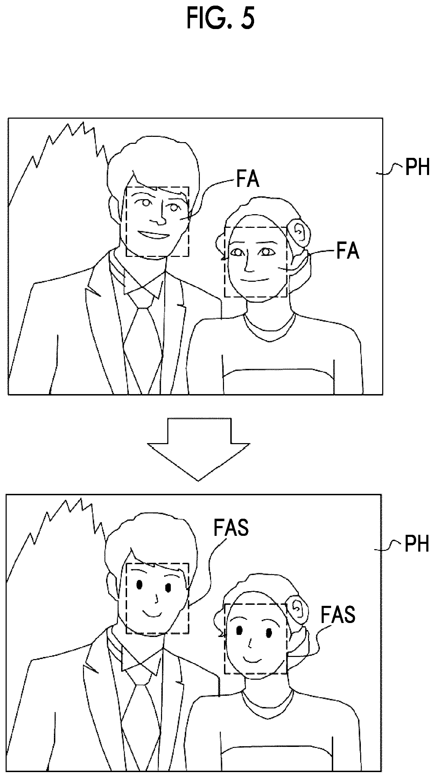

As illustrated in Fig. 5 as an example, in the generalization processing of the present example, the alteration unit 26B replaces the face FA of the person included in the image PH with a schematic face FAS. For example, the alteration unit 26B cuts out a rectangular region including the face FA as a face image and combines this part with the schematic face FAS that is a schematic image indicating a face prepared in advance. For example, the schematic face FAS is in a form of an illustration with which specifying the individual is difficult.

After the generalization processing, the alteration unit 26B executes image fitting processing of fitting the image PH on which the generalization processing is performed into the original album AL again. The alteration unit 26B fits the image PH replaced with the schematic face FAS into the frame FR corresponding to the original image PH of the album AL. The generalization processing is not performed on the image PH not including the face FA of the person. Thus, the image PH is fitted into the original frame FR of the album AL in its original state. The alteration unit 26B executes the same processing for all pages of the album AL.

In the present example, in the alteration processing, the alteration unit 26B first extracts the image PH from the album AL, performs the generalization processing on the extracted image PH, and then, performs processing of fitting the image PH into the album AL again. However, this is an example, and various aspects are considered as the alteration processing. For example, the alteration unit 26B may perform the face recognition processing and the generalization processing on a page image obtained by combining the image PH with the frame FR without extracting the image PH from the album AL. In addition, a form of separately storing data of the template TP and data of the image PH is possible as a form of data of the album AL. In this case, each time the album AL is reproduced, the template TP and the image PH are combined based on layout data that defines frame information for fitting the image PH. In a case where the form of the data of the album AL is such a form, the extraction and the fitting performed again are not necessary. For example, the frame information includes positional information and size information of the frame FR in the page.

The storage unit 26C executes storage processing of storing the album AL on which the alteration processing is performed in the database 4, which is an example of the storage unit, as the sample SP to be used for creating a new album AL. In addition, after the storage processing of the sample SP is finished, the storage unit 26C deletes the album AL that is loaded into the memory 13 to be used as a base for creating the sample SP from the memory 13. In the present embodiment, while the storage unit 26C deletes the album AL used as the base for creating the sample SP from the memory 13, the album AL as the base for creating the sample SP may be recorded in the storage 14 and/or the database 4. For example, the album AL may be recorded in association with the user who can use the album AL, and in reading out the sample SP, the album AL may be read out instead of the sample SP in a case where the user who is using the user terminal 7 that is the request source of the presentation request is the user who can use the album AL as the base for creating the sample SP. In other words, viewing of the album AL by other than the user associated with the album AL is restricted. For example, the user who can use the album AL is a user who uploads the album AL to the sample storage device 2.

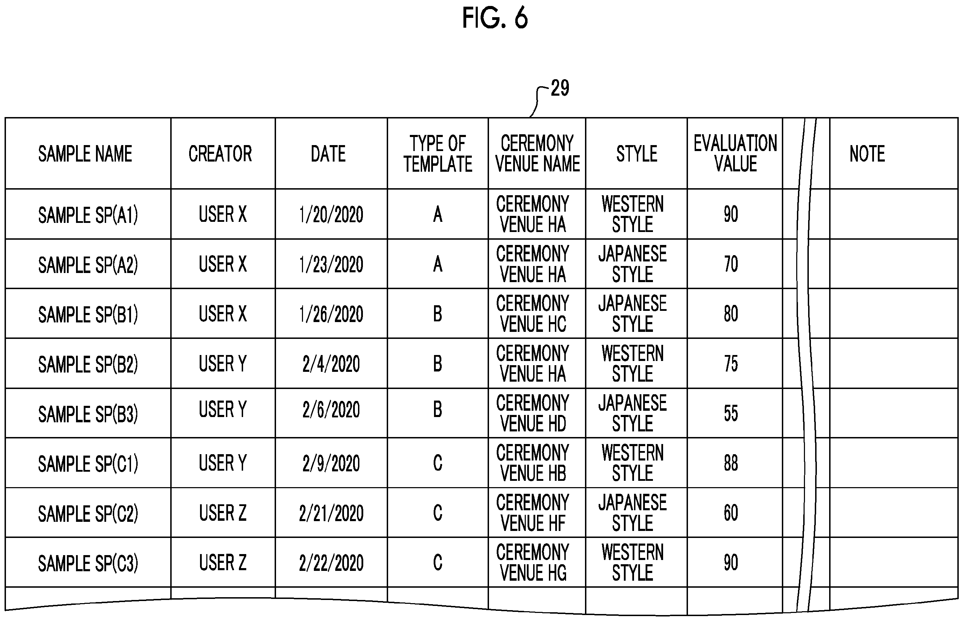

As illustrated in Fig. 6 as an example, the database 4 stores stored sample information 29 in which information about a plurality of stored samples SP is recorded. For example, the stored sample information 29 is used for searching for the sample SP that coincides with a search condition input by the user. The stored sample information 29 includes a record in which items such as a creator, a date, a type of template, a ceremony venue name, a style, and an evaluation value indicating an attribute of each sample SP are recorded for each sample SP. The creator is a user name who creates the album AL as the base for creating the sample SP. For example, the date is a creation date of the sample SP or a registration date on which the sample SP is registered in the sample storage device 2. In addition, the date may be a capturing date of the image included in additional information such as exchangeable image file format (EXIF) information associated with the image PH included in the album AL. The type of template is a type of the template TP used in the sample SP. The ceremony venue name is a ceremony venue name in which the image PH included in the sample SP is captured. The style is a style of wedding illustrated in the image PH of the sample SP. In the present example, two types of "Japanese style" and "western style" are illustrated in the style. Furthermore, "civil style" or the like may be added as the style. The evaluation value is an evaluation value assigned to each sample SP. For example, the evaluation value is decided based on the number of times the sample SP is used, or a result of a popularity vote of the user casted to the sample SP. This stored sample information 29 may be input by the user or may be input by the sample storage device 2 by performing the image analysis processing on the image PH included in the sample SP.

For example, in the sample SP(A1), the creator is the "user X", the date is "2020/1/20", the type of template is "A", the ceremony venue name is "ceremony venue HA", the style of ceremony is "western style", and the evaluation value is "90". In addition, in the sample SP(A1) and the sample SP(B2), the ceremony venue is the same "HA", and the style is the same "western style", but the type of template is different. In addition, in the sample SP(A1) and the sample SP(A2), the ceremony venue is the same, and the type of template is the same, but the style is different between "western style" and "Japanese style". As illustrated in the stored sample information 29, the database 4 stores various samples SP. The items that are illustrated in the stored sample information 29 and indicate the attribute of each sample SP are an example and may include other items.

In addition, in the present example, while the stored sample information 29 is provided separately from data of each sample SP, and information indicating the attribute of each sample SP is recorded in the stored sample information 29, the information indicating the attribute may be recorded as accessory information of each sample SP. In this case, the stored sample information 29 may not be provided separately from each sample SP.

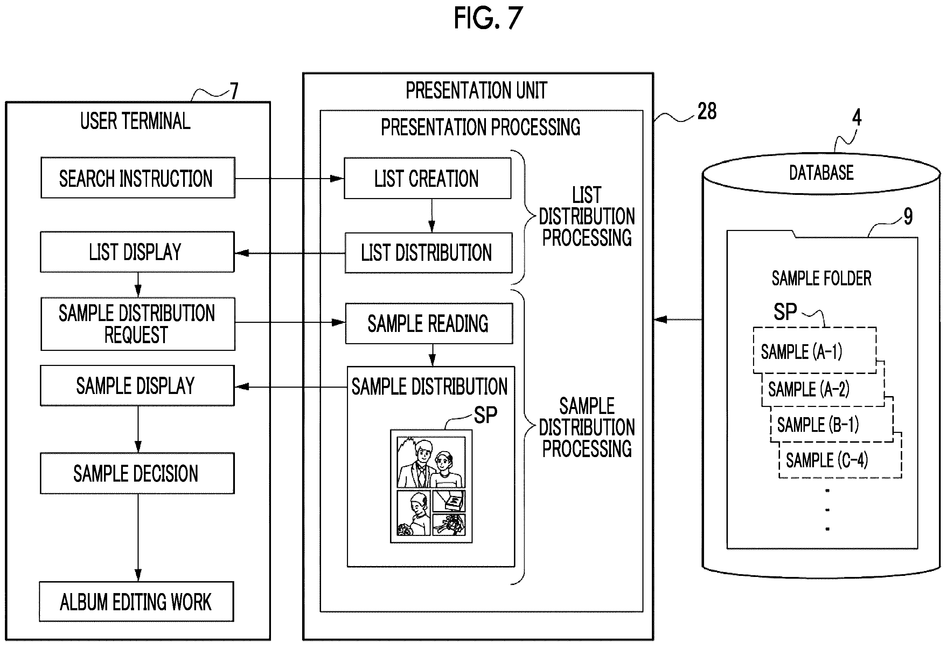

As illustrated in Fig. 7 as an example, the presentation unit 28 of the processor 12 executes presentation processing of presenting the sample SP stored in the database 4 to the user. As an example, the presentation processing includes list distribution processing and sample distribution processing.

The presentation processing is started based on the presentation request from the user terminal 7. For example, the presentation request includes a search instruction of the sample SP input by the user. In inputting the search instruction, first, the user terminal 7 accesses the sample sharing system 1 using an account of the user. In a case where the user terminal 7 accesses the sample sharing system 1, an operation screen for the sample sharing system 1 is displayed on a monitor 8 of the user terminal 7.

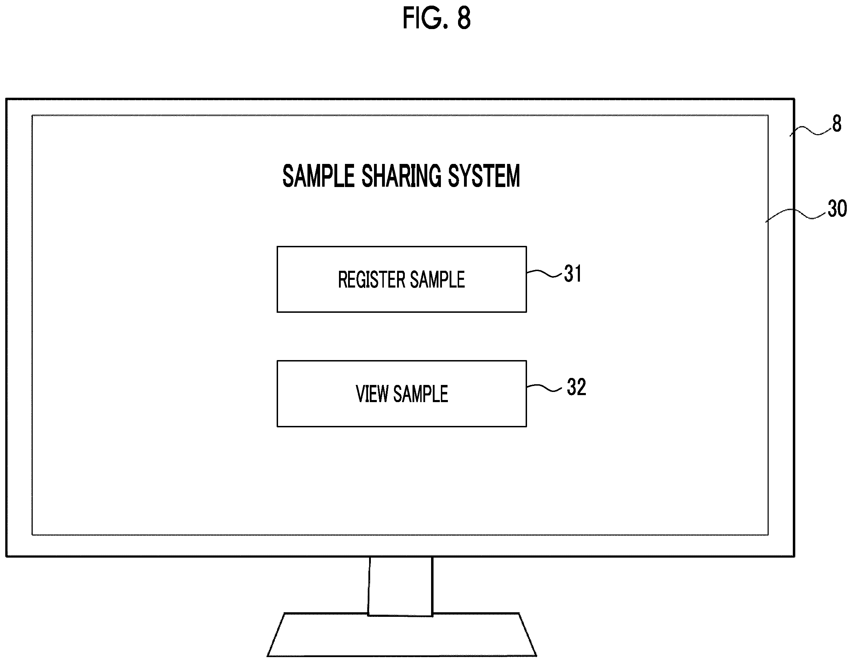

Fig. 8 illustrates an example of the operation screen in a case where the user terminal 7 accesses the sample sharing system 1. The operation screen illustrated in Fig. 8 is an example of a main screen 30 in a case of performing an operation related to the sample SP. A menu for registering the sample SP and viewing the sample SP is displayed on the main screen 30 in a form of function buttons. In the main screen 30 of the present example, two buttons of a registration button 31 and a viewing button 32 are provided as the function buttons.

The registration button 31 is a button for inputting an instruction to register the created album AL created by the user as the sample SP. In the registration button 31, "Register sample" is displayed. In a case where the registration button 31 is clicked, for example, a selection window in which the created album AL to be registered is selected is displayed on the monitor 8 of the user terminal 7 (not illustrated). In the selection window, in a case where the created album AL to be registered is selected, and an execution button, not illustrated, is clicked, the selected album AL is uploaded to the sample storage device 2.

The viewing button 32 is a button for inputting an instruction for the user to view the sample SP stored in the database 4. In the viewing button 32, "View sample" is displayed.

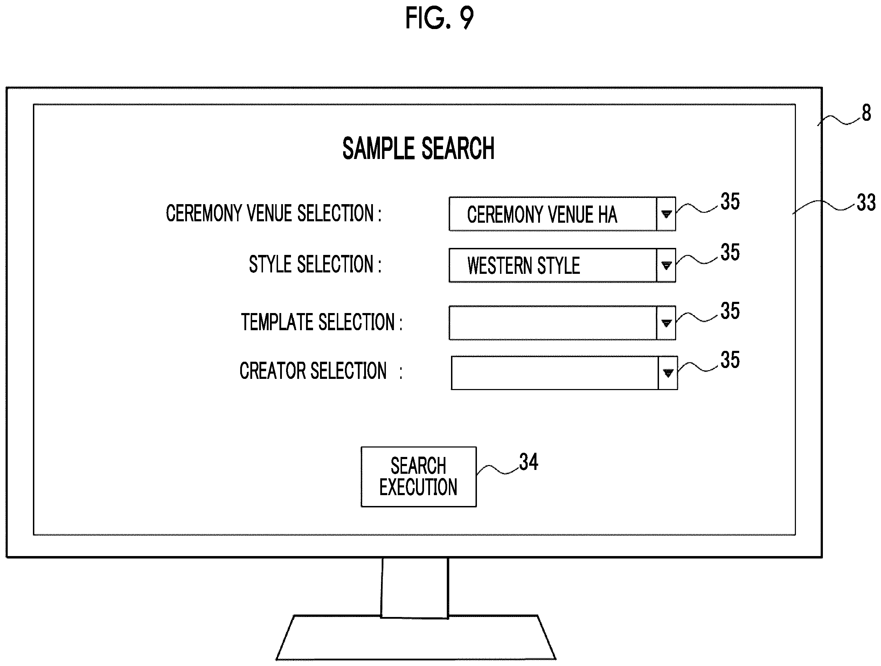

Fig. 9 illustrates an example of a search screen 33. In the main screen 30 illustrated in Fig. 8, in a case where the viewing button 32 is clicked by the user using an operation device such as a mouse, the main screen 30 transitions to the search screen 33. The user inputs the search condition of the sample SP through the search screen 33 displayed on the monitor 8 of the user terminal 7. A condition input box 35 for inputting each of four items for ceremony venue selection, style selection, template selection, and creator selection as the search condition is provided in the search screen 33. For example, in a case where an arrow button at a right end of each condition input box 35 is clicked, a pull-down menu is displayed. For example, in a case of the condition input box 35 for the ceremony venue selection, ceremony venue names such as "ceremony venue HA" and "ceremony venue HB" are displayed in the pull-down menu.

The user inputs the search condition of the preferred sample SP into the condition input box 35. In the example in Fig. 9, "ceremony venue HA" is input into the condition input box 35 for the ceremony venue selection, and "western style" is input into the condition input box 35 for the style selection. The user does not need to input the search condition into all input boxes 35 and can input only a preferred search condition. After the search condition is input, in a case where a search execution button 34 is clicked, the search instruction including the input search condition is transmitted to the sample storage device 2. In other words, the search instruction includes information for designating at least any item of the stored sample information 29.

In Fig. 7, in a case where the search instruction is received, the presentation unit 28 performs the list distribution processing. In the list distribution processing, based on the search condition input by the user, the presentation unit 28 executes search processing of searching for the sample SP that coincides with the search condition designated by the user in the stored sample information 29 in which information about the plurality of samples SP stored in the database 4, which is an example of the storage unit, is recorded. In this searching, for example, the presentation unit 28 uses the stored sample information 29 illustrated in Fig. 6. The presentation unit 28 distributes a list 10 that displays a list of samples SP coinciding with the search condition to the user terminal 7 as a search result.

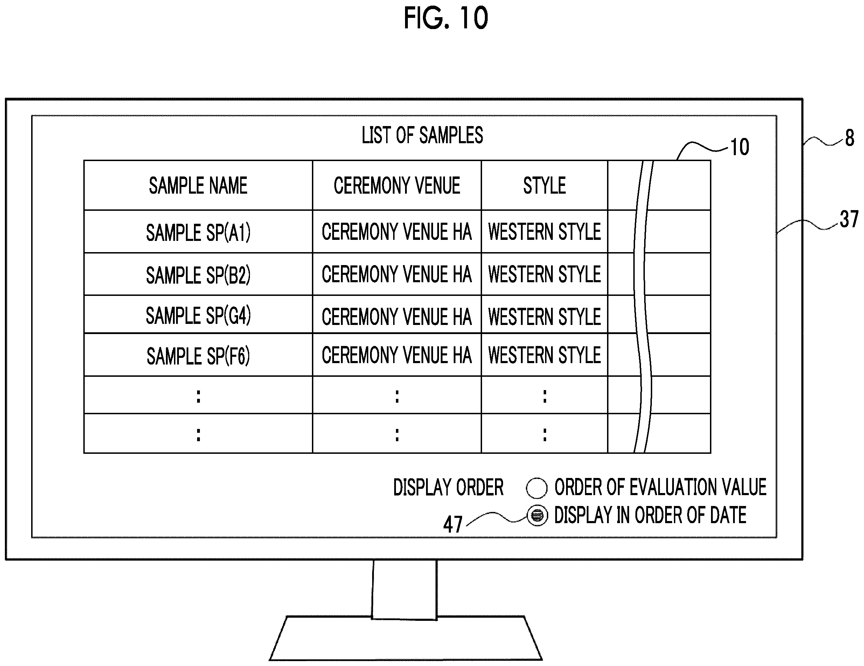

As illustrated in Fig. 10 as an example, the list 10 is displayed on a list display screen 37 displayed on the monitor 8. The list 10 displays a list of a plurality of searched samples SP. In the list 10, information related to the samples SP coinciding with the search condition selected on the search screen 33 in Fig. 9 is displayed. In the list 10, a display order of the information related to the plurality of samples SP can be selected between an order of date and an order of evaluation value. A radio button 47 is a selection button for selecting the display order. In the example in Fig. 10, the order of date is selected. In the order of date, for example, while the information related to the samples SP coinciding with the search condition is displayed in order from the newest date, the information may also be displayed in order from the oldest date by setting. In addition, in a case where the order of evaluation value is selected, the information related to the samples SP coinciding with the search condition is displayed in order from the highest evaluation value. The evaluation value illustrated in Fig. 6 is used as the evaluation value.

In the list 10, link information for viewing each sample is assigned to a sample name of each sample SP. In a case where any of the names of the plurality of samples SP is clicked to be selected on the list display screen 37, a distribution request of the selected sample SP is transmitted to the sample storage device 2 from the user terminal 7 as illustrated in Fig. 7. For example, the distribution request of the sample SP includes a sample number of the sample SP selected by the user. In a case where the distribution request of the sample SP is received, the presentation unit 28 performs the sample distribution processing.

In the sample distribution processing, the presentation unit 28 reads out the selected sample SP from the database 4. More specifically, the presentation unit 28 reads out the selected sample SP from the database 4 based on the sample number of the sample SP included in the distribution request of the sample SP corresponding to the selection made by the user. The presentation unit 28 distributes the read sample SP to the request source user terminal 7. For example, in Fig. 10, in a case where the sample SP(A1) is selected, the sample SP(A1) is distributed to the user terminal 7. The distributed sample SP is displayed on the monitor 8 of the user terminal 7.

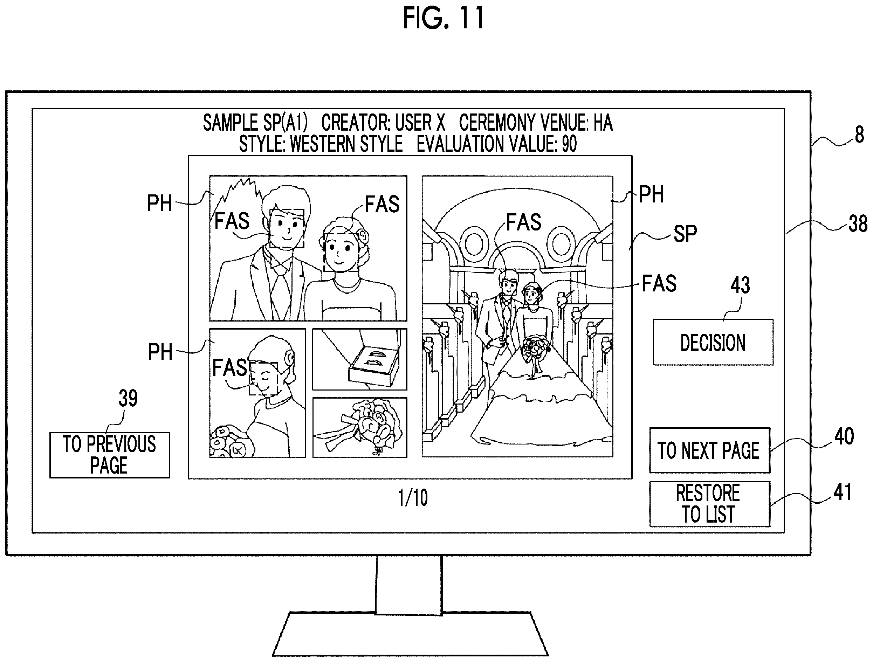

As illustrated in Fig. 11 as an example, the sample SP is displayed at a center of a sample display screen 38. The stored sample information 29, for example, the sample name, the creator, the ceremony venue, the style, and the evaluation value, of the displayed sample SP (in the present example, (A1)) is displayed above the sample SP. The sample SP is displayed for every two-page spread. The face FA of the person included in the image PH of the sample SP is changed to the schematic face FAS. On the monitor 8, clicking a page restoring button 39 restores the sample display screen 38 to a previous page, and clicking a page advance button 40 advances the sample display screen 38 to a next page. In addition, a decision button 43 is clicked in a case of deciding to use the displayed sample SP. In a case where the decision button 43 is clicked, the displayed sample SP is stored in the user terminal 7. Accordingly, the user can create a new album AL using the stored sample SP.

A return button 41 is a button for returning to the list display screen 37 illustrated in Fig. 10 from the sample display screen 38. In a case where the user wants to display a different sample SP, the user selects the sample SP to be displayed again on the list display screen 37.

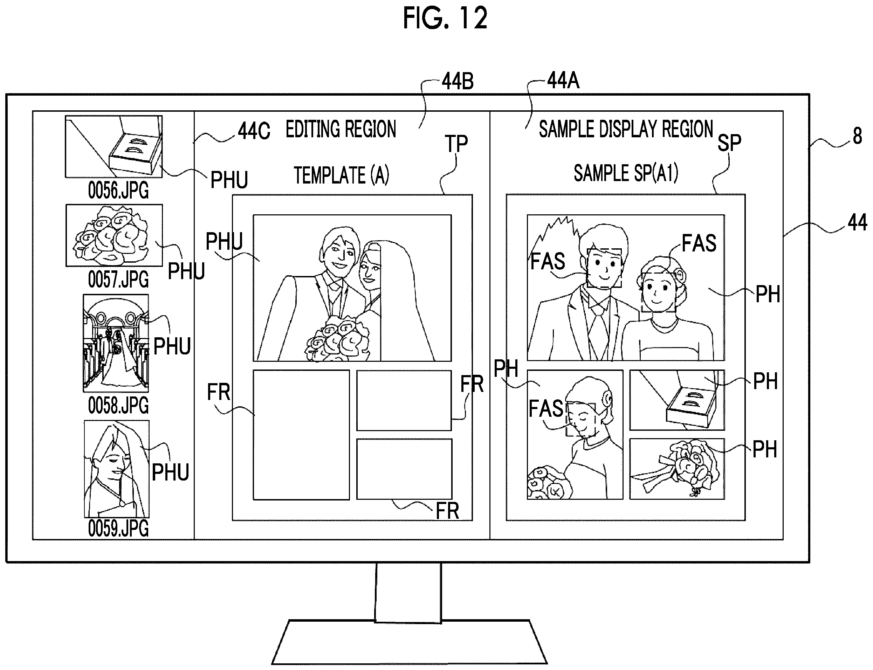

Fig. 12 is an example of an editing screen 44 of an album creation support program for supporting the creation of the album AL. In the present example, the user terminal 7 is provided with an album creation support service of an application service provider (ASP) type for the editing work of the album AL. In a case of the service of the ASP type, the album creation support program is installed on a server, and the user terminal 7 accesses the server providing the service of the ASP type through, for example, a WEB browser. The editing screen 44 is distributed to the user terminal 7 from the server. The user terminal 7 advances the editing work of the album AL while communicating with the server. The server of the present example that provides the album creation support service cooperates with the sample sharing system 1 and corresponds to a form of the sample SP distributed by the sample sharing system 1. The album creation support program may be installed on the sample storage device 2 of the present embodiment. That is, the sample storage device 2 may operate as the server in the editing work of the album creation support program.

In the present example, while the service of the ASP type is illustratively described for editing the album AL, the album creation support program may also be in a form of software installed on the user terminal 7.

The editing screen 44 of the present example has a sample display region 44A, an editing region 44B, and an image display region 44C. The sample display region 44A is a region in which the sample SP distributed from the sample sharing system 1 is displayed. In the present example, the sample SP(A1) is displayed in the sample display region 44A. The editing region 44B is a region in which a new album AL is created. The same template TP as the template TP used in the sample SP is displayed in the editing region 44B. In the present example, the template TP(A) is displayed in the editing region 44B. A plurality of the images PH (hereinafter, referred to as user images PHU) of the user to be used in the newly created album AL are displayed in the image display region 44C. The user image PHU is digital data representing a "user image" according to the embodiment of the disclosed technology.

In the editing screen 44, since the template TP and the sample SP of the newly created album AL are displayed side by side, the user can perform the editing work of the album AL while seeing the sample SP.

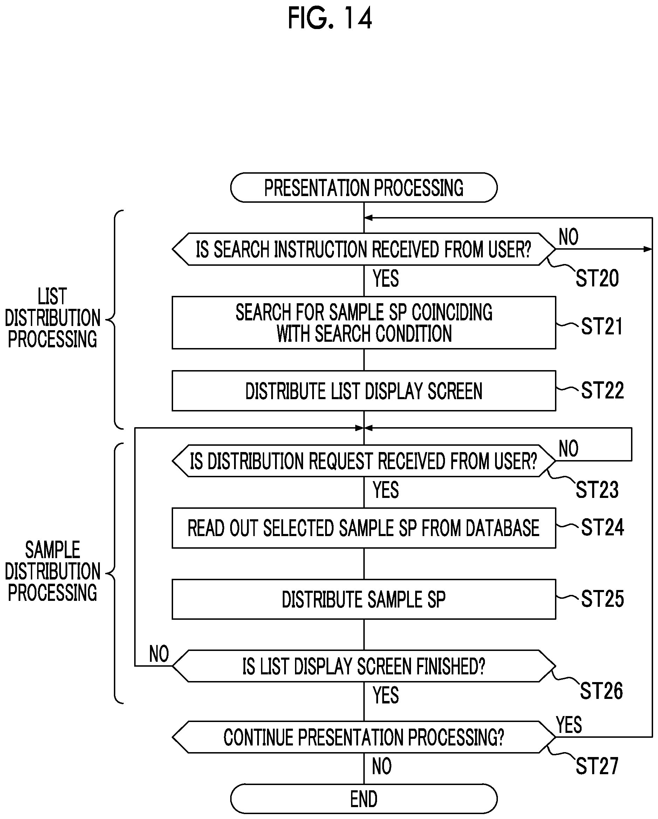

Next, an action of the above configuration will be described with reference to Fig. 13 and Fig. 14. In a case where the operation program 22 is started, the processor 12 of the sample storage device 2 functions as the collection unit 26 and the presentation unit 28 as illustrated in Fig. 3.

As illustrated in Fig. 13 as an example, in the collection processing, the sample storage device 2 waits for the upload of the created album AL from the user terminal 7 (step ST10). In a case where the created album AL is registered in the sample sharing system 1, the user terminal 7 accesses the sample sharing system 1 in accordance with an operation performed by the user using the account of the user and displays the main screen 30 illustrated in Fig. 8 on the monitor 8 of the user terminal 7. In a case where the user clicks the registration button 31 in the main screen 30 and selects the created album AL in the selection window as the album AL to be registered, the user terminal 7 executes the upload of the created album AL to the sample storage device 2. In a case where the album AL is stored in the database 4 instead of the user terminal 7, the album AL may be uploaded to the sample storage device 2 from the database 4 based on a permission to use the album AL as the sample SP from the user terminal 7.

In a case where the created album AL is uploaded from the user terminal 7 (YES in step ST 10), the acquisition unit 26A temporarily stores the uploaded album AL in the memory 13 (step ST11).

As illustrated in Fig. 4, the alteration unit 26B reads out the created album AL stored in the memory 13. The alteration unit 26B extracts the image PH from the read album AL (step ST13). Furthermore, the alteration unit 26B detects the face FA of the person included in the image PH by performing the face recognition processing on each extracted image PH (step ST14). The alteration unit 26B performs the generalization processing of replacing the detected face FA of the person with the schematic face FAS on the image PH (step ST15). The alteration unit 26B restores the altered image PH to the original frame FR of the album AL (step ST16). For the image PH from which the face FA of the person is not detected in step ST14, step ST15 is skipped.

In the storage processing, the storage unit 26C stores the album AL on which the alteration processing is performed in the database 4 as the sample SP (step ST17).

In a case where the storage processing is finished in step ST17, the storage unit 26C performs deletion processing of deleting the album AL from the memory 13 (step ST18).

In step ST19, in a case of continuing the collection processing (YES in step ST19), the collection unit 26 is restored to step ST10 and continues to wait for the upload. In a case of finishing the collection processing (NO in step ST19), the collection processing is finished.

As illustrated in Fig. 14 as an example, in the presentation processing, the presentation unit 28 waits for the search instruction that is an example of the presentation request from the user in step ST20. In a case of viewing the sample SP, the user clicks the viewing button 32 in the main screen 30 (refer to Fig. 8) shown on the user terminal 7. Then, the search screen 33 illustrated in Fig. 9 is displayed on the user terminal 7. After inputting the search condition of the sample SP in the search screen 33, the user clicks the search execution button 34. Then, the search instruction is transmitted to the sample storage device 2.

The search instruction includes the search condition of the sample SP as illustrated in Fig. 9. In a case where the search instruction is received (YES in step ST20), the presentation unit 28 searches for the sample SP coinciding with the search condition from the plurality of samples SP stored in the database 4 (step ST21). The list display screen 37 on which the list 10 of the search result of the sample SP is displayed as illustrated in Fig. 10 is distributed to the user terminal 7 (step ST22).

Next, the user clicks the sample name of the sample SP preferred to be viewed from the list 10. Then, the distribution request of the selected sample SP is transmitted to the sample storage device 2. The presentation unit 28 waits for the distribution request in step ST23. In a case where the distribution request is received (YES in step ST23), the presentation unit 28 transitions to step ST24.

In step ST24, the presentation unit 28 reads out the selected sample SP from the database 4. The presentation unit 28 distributes the read sample SP to the user terminal 7 (step ST25). The distributed sample SP is displayed on the sample display screen 38 illustrated in Fig. 11 on the user terminal 7.

The user views the sample SP in the sample display screen 38. In a case where the user clicks the page advance button 40, the user terminal 7 advances the page of the sample SP. In a case where the user clicks the page restoring button 39, the user terminal 7 restores the page of the sample SP. By viewing the sample SP, the user can determine whether or not the sample SP is appropriate as the sample SP of the album AL to be newly created. On the sample display screen 38, not only the creator, the ceremony venue, and the style of the sample SP but also the evaluation value are displayed. The user can use such information as a reference in selecting the sample SP. In addition, since the generalization processing is performed on the sample SP, the person captured in the image PH has the schematic face FAS in the sample SP. Thus, the individual is not specified.

In a case where the user wants to view a different sample SP, the user displays the list display screen 37 on the monitor 8 using the return button 41 and clicks a link attached to a different sample name. Accordingly, the user can view a different sample SP.

In a case where the sample SP to be used is decided, the user clicks the decision button 43 on the sample display screen 38. Then, the selected sample SP is stored in the user terminal 7.

After the sample SP is distributed in step ST25, the presentation unit 28 monitors whether or not the display of the list display screen 37 on the user terminal 7 is finished by communicating with the user terminal 7 in step ST26. In a case where the list display screen 37 is not finished (NO in step ST26), a return is made to step ST23, and the distribution request of a different sample SP is waited for. In addition, in step ST26, in a case where the list display screen 37 is finished (YES in step ST26), the presentation unit 28 transitions to step ST27. In step ST27, the presentation unit 28 returns to step ST20 in a case of continuing the presentation processing (YES in step ST27) and finishes the presentation processing in a case of finishing the presentation processing (NO in step ST27).

The user who decides the sample SP to be used for creating the album performs the editing work of the album using the sample SP. The sample SP is displayed on the editing screen 44 illustrated in Fig. 12. The sample SP and the template TP used in the sample SP are displayed side by side on the editing screen 44. The sample SP is created based on the album AL created in the past and is not a simple template TP. The image PH used in the album AL is fitted in the frame FL. Thus, the user can perceive the overall configuration and the flow of the album AL through the sample SP.

The same template TP as the template TP used in the sample SP is displayed in the editing region 44B. Thus, the user can easily check which user image PHU is to be fitted into which frame FL in which page while seeing the sample SP. The user searches for the user image PHU having the same content as the image PH checked in the sample SP from the image display region 44C and fits the user image PHU into the template TP. Accordingly, an amount of time required for selection of the user image PHU that requires a significant amount of time in the editing work of the album AL can be reduced.

In addition, the sample storage device 2 of the present example executes the acquisition processing of acquiring the created album AL created by combining the template TP with the image PH and executes the alteration processing of altering the face FA of the person included in the image PH in the album AL to the state where specifying the individual is difficult by the generalization processing. The sample storage device 2 executes the storage processing of storing the sample SP on which the alteration processing is performed in the database SP, which is an example of the storage unit. Thus, it is possible to share various samples SP while protecting privacy of an image provider included in the sample SP of the album AL. That is, the sample SP can be shared among a plurality of users by alerting the face FA of the person included in the image PH in the album AL to the state where specifying the individual is difficult.

In addition, by protecting the privacy, the created album AL as the base for creating the sample SP is easily provided. Thus, the collection of the sample SP is also promoted. Thus, the number of samples SP having a high value of use can be increased among users of small business operators.

In addition, the sample storage device 2 of the present example replaces the face FA of the person with the schematic face FAS as processing of altering the face FA of the person included in the image PH to the state where specifying the individual is difficult. Thus, the generalization processing can be executed as simple processing of replacing the image.

### "Modification Example of Generalization Processing"

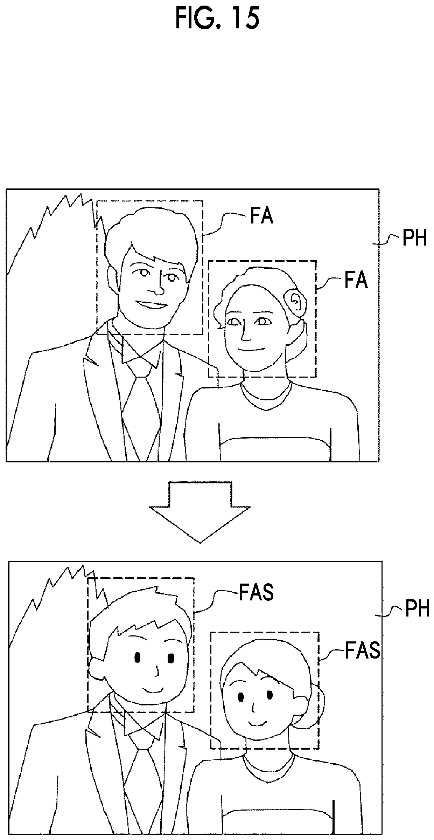

In the embodiment, while the image in the form of the illustration illustrated in Fig. 5 is used as the schematic face FAS, the disclosed technology is not limited thereto. For example, an avatar as illustrated in Fig. 15 may be used as the schematic face FAS. The avatar is a caricature created by selecting a part close to the face FA of the person of the image PH from each of a plurality of face type parts, hair type parts, eye parts, nose parts, and mouth parts prepared in advance and combining the selected parts. In addition, in the example in Fig. 15, the alteration unit 26B replaces the entire head portion including a face region and a hair region with the avatar as the face FA of the person to be replaced. In a case of using the avatar, the alteration unit 26B may also replace only a part including the eyes, the nose, and the mouth with the avatar as illustrated in Fig. 5. In addition, the alteration unit 26B may use not only the avatar but also an image in a form of an animation.

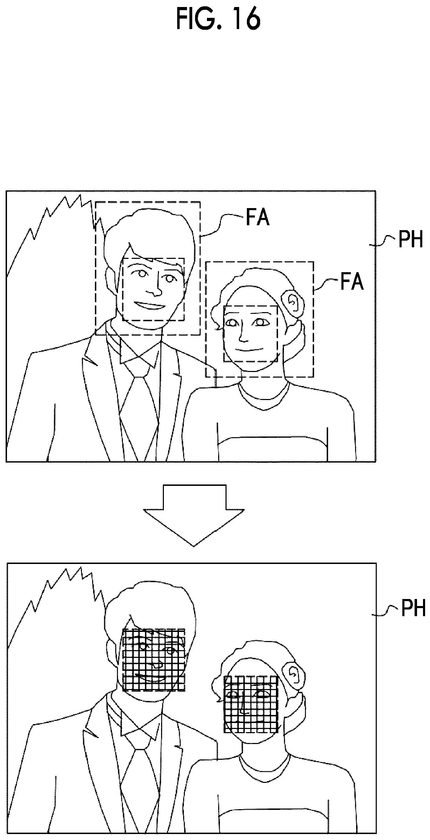

In addition, for example, as illustrated in Fig. 16, in the alteration processing, the alteration unit 26B may perform mosaic processing (illustrated by hatching in Fig. 16) on the face FA of the person included in the image PH as the generalization processing. The mosaic processing can be performed more simply than the processing of replacing the face FA of the person of the image PH with the schematic face FAS.

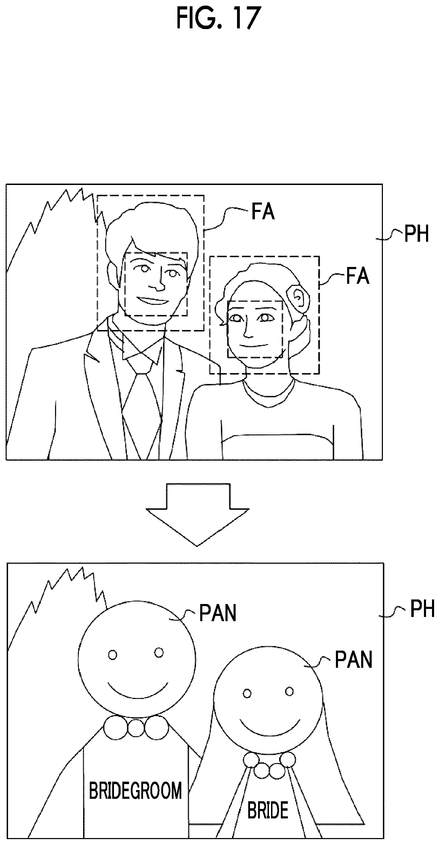

Furthermore, for example, as illustrated in Fig. 17, in the alteration processing, the alteration unit 26C may replace the entire person image including the face in the image PH with a schematic person image PAN as the generalization processing. In executing the generalization processing, the alteration unit 26 may add specification information with which a type of person can be specified to the image PH. For example, the type of person is information indicating a bride, a bridegroom, a relative, or a friend and is added to the image PH by image analysis or a user input. In addition, for example, adding the specification information to the image PH indicates adding character information or the like indicating the type of person. In the example in Fig. 17, characters of "bridegroom" and "bride" are added to the person image PAN in the image PH as the specification information for the type of person.

### "Various Aspects of Search Condition"

In addition, in the embodiment, the sample storage device 2 searches for the sample SP coinciding with the search condition from the samples SP stored in the database 4, which is an example of the storage unit, based on the search condition input by the user and presents the searched sample SP to the user. Thus, the sample SP corresponding to the preference of the user is easily searched.

In addition, in the embodiment, as illustrated in Fig. 9, the type of the template TP used in the sample SP, the creator of the sample SP, the ceremony venue as an example of a venue in which the image PH included in the sample SP is captured, and the like are illustrated as the search condition of the sample SP. Other search conditions may also be possible. For example, the search condition may be an evaluation of the sample SP. In this case, for example, the evaluation value of each sample SP recorded in the stored sample information 29 illustrated in Fig. 6 is used. In addition, the date of the sample SP recorded in the stored sample information 29 may be used as the search condition. The date is the registration date or the creation date of the sample SP. Using such various items as the search condition enables the sample SP to be used from various viewpoints.

### [Second Embodiment]

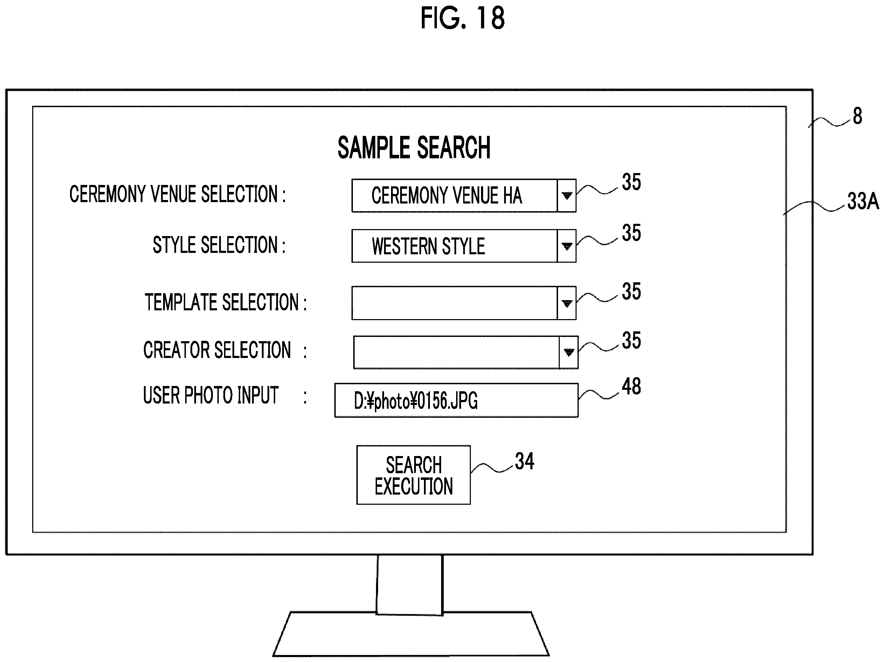

The sample storage device 2 of a second embodiment illustrated in Fig. 18 to Fig. 20 is in a form of further using the user image PHU that is to be used in the album AL to be created by the user as the search condition. The second embodiment has the same basic configuration as the first embodiment. Thus, only differences will be described. For example, the user image PHU is the user image PHU displayed in the image display region 44C of the editing screen 44 in Fig. 12. The presentation unit 28 can receive the user image PHU as the search condition.

In this case, for example, as illustrated in Fig. 18, a condition input box 48 for inputting the user image is provided in a search screen 33A. For example, a file name of the user image PHU is input into the condition input box 48. In addition, a folder name in which a plurality of the user images PHU are stored may be input into the condition input box 48. In a case where the file name or the folder name of the user image PHU is input into the condition input box 48, the selected user image PHU is transmitted to the sample storage device 2 from the user terminal 7.

In a case where the user image PHU is received as the search condition, the presentation unit 28 calculates a degree of similarity between the user image PHU and the image PH included in the sample SP and preferentially presents the sample SP of which the calculated degree of similarity is relatively high to the user over the sample SP of which the degree of similarity is relatively low.

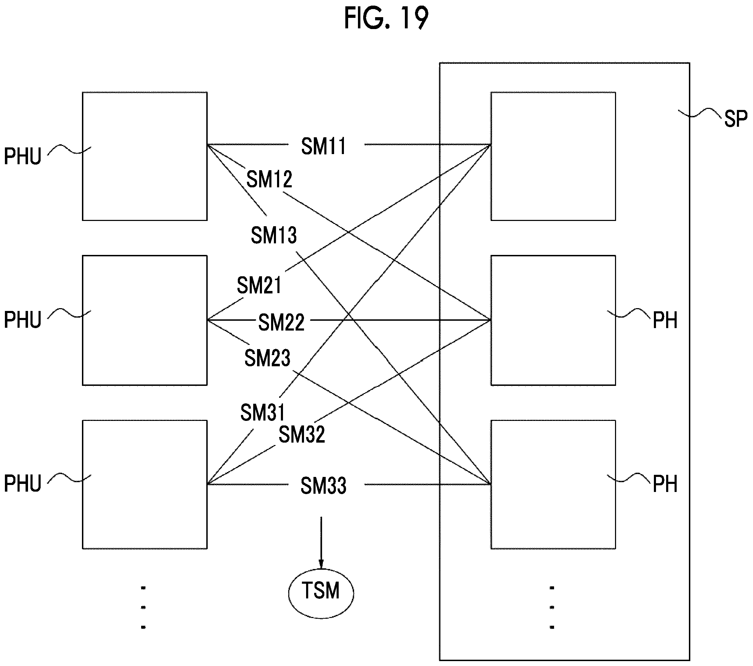

As illustrated in Fig. 19, for example, in a case where the plurality of user images PHU and the plurality of images PH included in the sample SP are present, the presentation unit 28 calculates an individual degree of similarity SM of each combination by comparing one by one for all combinations. In the example in Fig. 19, in a case where there are three user images PHU and three images PH of the sample SP, the number of combinations is 3 × 3 = 9. Thus, the presentation unit 28 calculates nine individual degrees of similarity SM11 to SM33. In the calculation of the individual degree of similarity SM, for example, the calculation is performed based on whether the person captured in the image PH is a bridegroom or a bride, a size of the face FA of the person, and the number of persons. The presentation unit 28 calculates a total degree of similarity TSM by adding up the individual degrees of similarity SM11 to SM33 of each combination. In calculating the total degree of similarity TSM, similarity or the like between the number of user images PHU and the number of images PH of the sample SP may also be considered. The presentation unit 28 performs such processing for each sample SP. The presentation unit 28 searches for the sample SP including the image PH similar to the user image PHU based on the total degree of similarity TSM calculated for each sample SP.

Such calculation of the total degree of similarity TSM between the user image PHU and the sample SP is significantly complicated. Thus, instead of comparing all combinations of the images, the presentation unit 28 may calculate the individual degree of similarity SM by narrowing down to images of a specific scene and calculate the total degree of similarity TSM using only a result thereof. For example, the presentation unit 28 calculates the total degree of similarity TSM by selecting images of an important scene such as ring exchange in a case of a wedding ceremony or cake cutting in a case of a wedding reception and comparing only the images of the important scene. In addition, a machine learning model may be used in the calculation of the total degree of similarity TSM.

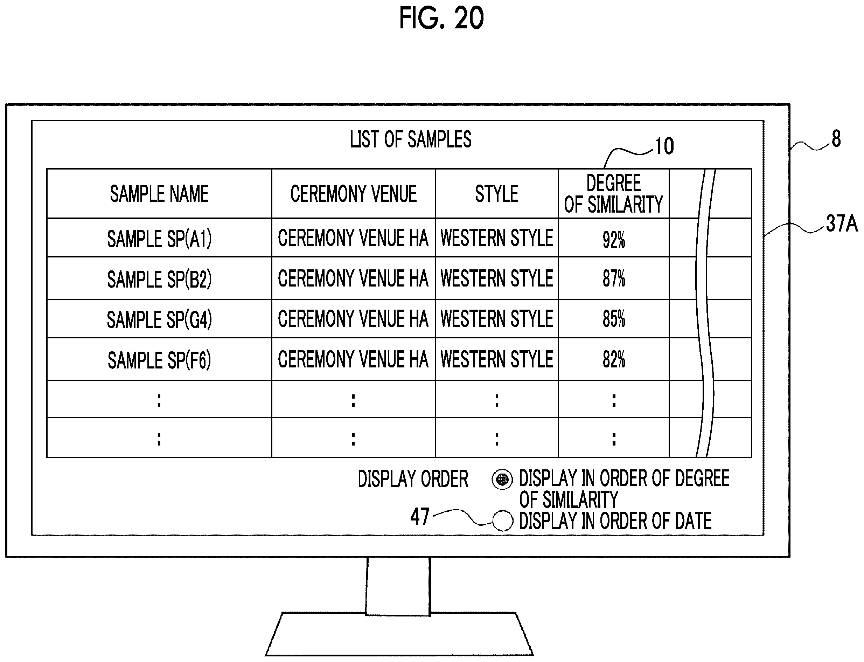

The presentation unit 28 displays the total degree of similarity TSM calculated for each sample SP on the list 10 as a degree of similarity of each sample SP as illustrated in a list display screen 37A illustrated in Fig. 20 as an example. In addition, in the list display screen 37A, an order of degree of similarity can be selected as the display order using the radio button 47. In the example illustrated in Fig. 20, the plurality of samples SP are displayed in order from a relatively high degree of similarity. In addition, in a case where the number of samples SP to be displayed is large, the presentation unit 28 may perform processing of displaying only the sample SP having a degree of similarity greater than or equal to a preset threshold value in the list 10 and not displaying the sample SP having a degree of similarity less than the threshold value. The presentation unit 28 calculates the total degree of similarity TSM between the user image PHU and the image PH included in the sample SP and preferentially presents the sample SP of which the calculated total degree of similarity TSM is relatively high to the user over the sample SP of which the total degree of similarity TSM is relatively low. Accordingly, the sample SP appropriate for the user image PHU is easily searched.

### [Third Embodiment]

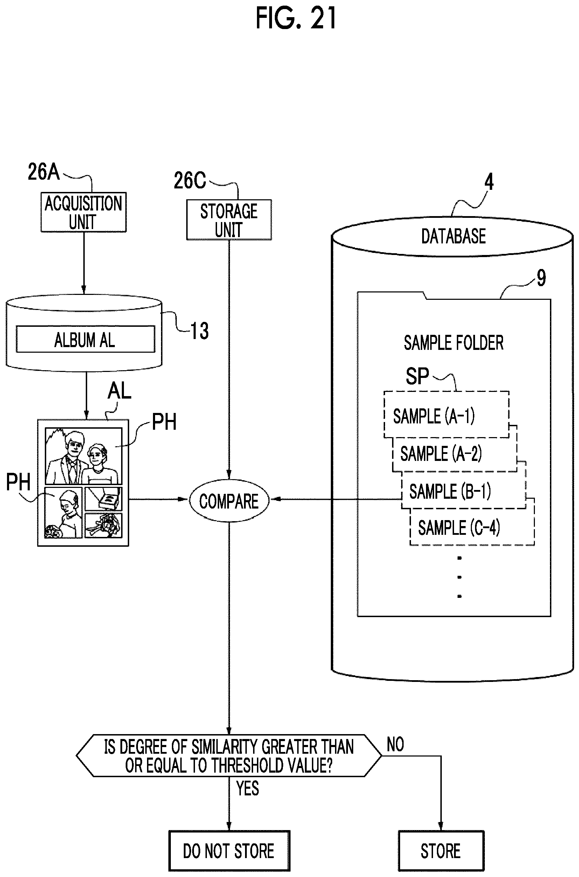

The sample storage device 2 of a third embodiment illustrated in Fig. 21 has an aspect in which the storage unit 26C decides whether or not to store the acquired album AL as the sample SP based on a preset storage condition. The acquisition unit 26A acquires the album AL uploaded from the user terminal 7. The storage unit 26C of the present example compares the album AL acquired by the acquisition unit 26A with the stored sample SP to calculate a degree of similarity between both. In a case where the calculated degree of similarity is greater than or equal to a preset threshold value, the acquired album AL is not stored as the sample SP.

That is, even in a case where the album AL similar to the stored sample SP is newly added as the sample SP, only the number of samples SP having a duplicate content is increased, and the number of variations in content of the sample SP is not increased. Performing such a determination by the storage unit 26C avoids duplication of similar samples SP and can suppress an increase in the number of unnecessary samples SP.

Other storage conditions may also be possible. For example, a storage condition that in a case where the acquired album AL is compared with the stored sample SP, and a preset condition is different such that the styles of both are different between "Japanese style" and "western style" or the ceremony venues are different, the acquired album AL is decided to be stored even in a case where the degree of similarity is greater than or equal to the threshold value is considered. This is because in a case where the ceremony venues or the styles are different, it is considered that the number of variations of the sample SP is increased.

While a system for sharing samples of a wedding album is described in the embodiments, the disclosed technology is not limited thereto. The samples shared in the sample sharing system 1 may be samples of any album as long as the samples of the album include a face of a person, such as a graduation album.

In addition, in the embodiments, while the user is illustratively described as a small business operator such as a cameraman, the disclosed technology is not limited thereto. For example, the sample sharing system 1 may not be used by a business operator for business purposes and may be used by a marrying person as a non-business user. In addition, the marrying person may use the sample sharing system 1 for selecting a business operator to request the creation of the album AL instead of the purpose of creating the album AL. According to the sample storage device 2, the requester 6 can designate the creator of the sample SP as the search condition as illustrated in Fig. 9. The requester 6 can select a preferred business operator by comparing the samples SP of a plurality of creators. In addition, in this case, it is preferable that the requester 6 evaluates each sample SP.

From a viewpoint of a business operator creating the album AL, such a method of use motivates the business operator to accept work because the album AL created by the business operator is stored in the database 4 as the sample SP. Thus, by recommending the method of use used in selecting a business operator to request the creation of the album, an effect of easily collecting the samples SP by expecting a sales effect is also considered.

Furthermore, in the embodiments, each time the user downloads the sample SP, the user may be charged with a constant fee, and furthermore, the creator of the downloaded sample SP may be paid with a constant fee. According to this, the user is motivated to provide the album AL of good quality as the sample SP, and quality improvement of the sample SP to be stored in the database 4 can be expected.

In the embodiments, for example, various processors illustrated below can be used as a hardware structure of a computer that executes various processing of the collection unit 26 and the presentation unit 28 of the sample storage device 2. The various processors include, in addition to the CPU (an example of the processor 12 of the embodiments) that is a general-purpose processor functioning as various processing units by executing software (operation program 22), a programmable logic device (PLD) that is a processor such as a field programmable gate array (FPGA) having a circuit configuration changeable after manufacturing, a dedicated electric circuit that is a processor such as an application specific integrated circuit (ASIC) having a circuit configuration dedicatedly designed to execute specific processing, and the like. A graphics processing unit (GPU) may be used instead of the FPGA.

One processing unit may be composed of one of the various processors or may be composed of a combination of two or more processors of the same type or different types (for example, a combination of a plurality of FPGAs and/or a combination of a CPU and an FPGA or a combination of a CPU and a GPU). In addition, a plurality of processing units may be composed of one processor.

A first example of the plurality of processing units composed of one processor is, as represented by a computer such as a client and a server, a form in which one processor is composed of a combination of one or more CPUs and software, and the processor functions as the plurality of processing units. A second example is, as represented by a system on chip (SOC) and the like, a form of using a processor that implements functions of the entire system including the plurality of processing units in one integrated circuit (IC) chip. Accordingly, various processing units are configured using one or more of the various processors as a hardware structure.

Furthermore, more specifically, an electric circuit in which circuit elements such as semiconductor elements are combined can be used as a hardware structure of the various processors.

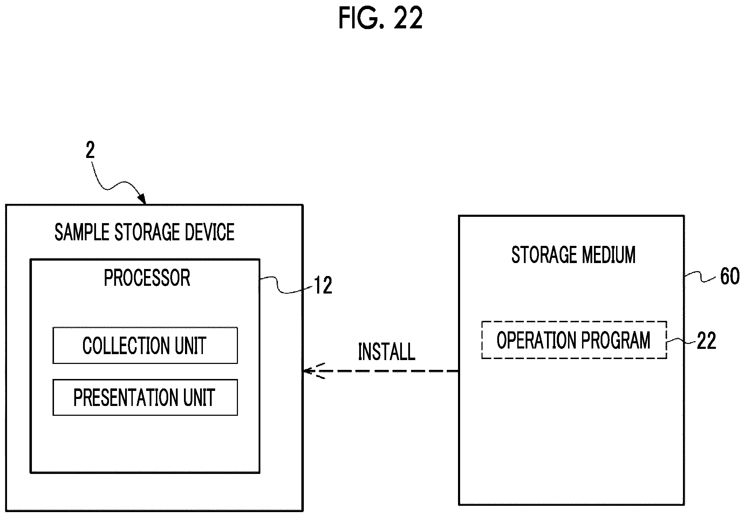

In addition, in the first embodiment, while the operation program 22 is stored in the storage 14, the disclosed technology is not limited thereto. As illustrated in Fig. 22 as an example, the operation program 22 may be stored in any portable storage medium 60 such as an SSD or a universal serial bus (USB) memory. In this case, the operation program 22 stored in the storage medium 60 is installed on the sample storage device 2. The processor 12 executes various processing in accordance with the installed operation program 22.

In addition, the operation program 22 may be stored in a storage unit of another computer, a server apparatus, or the like connected to the sample storage device 2 through a communication network (not illustrated), and these programs may be downloaded to the sample storage device 2 in accordance with a request from the sample storage device 2. In this case, the processor 12 executes various processing in accordance with the downloaded operation program 22.

As described in the embodiments, contents of the following appendices may be added to the image content determination device according to the embodiment of the present disclosure.

### [Appendix 1]

The processor may be configured to replace the face of the person included in the image with a schematic face in the alteration processing.

### [Appendix 2]

The schematic face may be any of an illustration, an animation, or an avatar.

### [Appendix 3]

The processor may be configured to perform mosaic processing on the face of the person included in the image in the alteration processing.

### [Appendix 4]

The processor may be configured to decide whether or not to store the acquired album as the sample based on a preset storage condition.

### [Appendix 5]

The processor may be configured to not store the acquired album as the sample in a case where a degree of similarity between the acquired album and the stored sample is greater than or equal to a preset threshold value.

### [Appendix 6]

The processor may be configured to, in a case where the acquired album is created based on the sample on which the alteration processing is performed, not store the acquired album as the sample in a case where an editing amount of the acquired album with respect to the sample as a base is less than or equal to a preset threshold value.

### [Appendix 7]

The processor may be further configured to search for a sample coinciding with a search condition from the sample stored in the storage unit based on the search condition input by a user and present the searched sample to the user.

### [Appendix 8]

The search condition may include at least one of a type of the template used in the sample, a creator of the sample, a venue in which the image included in the sample is captured, or an evaluation of the sample.

### [Appendix 9]

The processor may be configured to receive a user image that is to be used in the album to be created by the user as the search condition, calculate a degree of similarity between the user image and the image included in the sample, and present the sample of which the calculated degree of similarity is relatively high to the user over the sample of which the degree of similarity is relatively low.

Various embodiments and/or various modification examples described above can be appropriately combined in the disclosed technology. In addition, the disclosed technology is not limited to the embodiments and may employ various configurations without departing from the gist thereof. Furthermore, the disclosed technology also applies to, in addition to the program, a storage medium that stores the program in a non-transitory manner.

Above described contents and illustrated contents are detailed descriptions for parts according to the embodiment of the disclosed technology and are merely an example of the disclosed technology. For example, description related to the above configurations, functions, actions, and effects is description related to an example of configurations, functions, actions, and effects of the parts according to the embodiment of the disclosed technology. Thus, unnecessary parts may be removed, new elements may be added, or parts may be replaced in the above described contents and the illustrated contents without departing from the gist of the disclosed technology. In addition, particularly, description related to common technical knowledge or the like that does not need to be described in terms of embodying the disclosed technology is omitted in the above described contents and the illustrated contents in order to avoid complication and facilitate understanding of the parts according to the embodiment of the disclosed technology.

In the present specification, "A and/or B" has the same meaning as "at least one of A or B". This means that "A and/or B" may be only A, only B, or a combination of A and B. In addition, in the present specification, the same approach as "A and/or B" is applied to a case where three or more matters are represented by connecting the matters with "and/or".

The disclosure of Japanese Patent Application No. 2020-064615 filed on March 31, 2020 is incorporated in the present specification by reference in its entirety. All documents, patent applications, and technical standards disclosed in the present specification are incorporated in the present specification by reference to the same extent as in a case where each of the documents, patent applications, technical standards are specifically and individually indicated to be incorporated by reference.

## Claims

1. A sample storage device comprising:
at least one processor,
wherein the processor is configured to execute
acquisition processing of acquiring an album created by combining a template with an image,
alteration processing of altering a face of a person included in the image in the album to a state where specifying an individual is difficult, and
storage processing of storing the album on which the alteration processing is performed in a database as a sample.

2. The sample storage device according to claim 1,
wherein the processor is configured to replace the face of the person included in the image with a schematic face in the alteration processing.

3. The sample storage device according to claim 2,
wherein the schematic face is any of an illustration, an animation, or an avatar.

4. The sample storage device according to claim 1,
wherein the processor is configured to perform mosaic processing on the face of the person included in the image in the alteration processing.

5. The sample storage device according to any one of claims 1 to 4,
wherein the processor is configured to decide whether or not to store the acquired album as the sample based on a preset storage condition.

6. The sample storage device according to claim 5,
wherein the processor is configured to not store the acquired album as the sample in a case where a degree of similarity between the acquired album and the stored sample is greater than or equal to a preset threshold value.

7. The sample storage device according to claim 5 or 6,
wherein the processor is configured to, in a case where the acquired album is created based on the sample on which the alteration processing is performed, not store the acquired album as the sample in a case where an editing amount of the acquired album with respect to the sample as a base is less than or equal to a preset threshold value.

8. The sample storage device according to any one of claims 1 to 7,
wherein the processor is further configured to search for a sample coinciding with a search condition from the sample stored in the database based on the search condition input by a user and present the searched sample to the user.

9. The sample storage device according to claim 8,
wherein the search condition includes at least one of a type of the template used in the sample, a creator of the sample, a venue in which the image included in the sample is captured, or an evaluation of the sample.

10. The sample storage device according to claim 8 or 9,
wherein the processor is configured to
receive a user image that is to be used in the album to be created by the user as the search condition,
calculate a degree of similarity between the user image and the image included in the sample, and
present the sample of which the calculated degree of similarity is relatively high to the user over the sample of which the degree of similarity is relatively low.

11. An operation method of a sample storage device including at least one processor, the operation method comprising:
by the processor,
executing acquisition processing of acquiring an album created by combining a template with an image;
executing alteration processing of altering a face of a person included in the image in the album to a state where specifying an individual is difficult; and
executing storage processing of storing the album on which the alteration processing is performed in a database as a sample.

12. An operation program causing a computer including at least one processor to function as a sample storage device, the operation program causing the processor to execute:
acquisition processing of acquiring an album created by combining a template with an image;
alteration processing of altering a face of a person included in the image in the album to a state where specifying an individual is difficult; and
storage processing of storing the album on which the alteration processing is performed in a database as a sample.
